# EUROPÄISCHE PATENTSCHRIFT

(11) **EP 3 100 857 B1**
(45) Veröffentlichungstag und Bekanntmachung des Hinweises auf die Patenterteilung: **05.08.2020**
(21) Anmeldenummer: 16177811.3
(22) Anmeldetag: 30.01.2014
(51) Int. Cl.: B32B 38/08, B32B 38/00, B32B 7/12, B32B 21/04, B32B 21/13, B32B 21/14, B27N 3/04

(54) **FUSSBODENBELAG UND VERFAHREN ZUM HERSTELLEN EINES FUSSBODENBELAGS**
FLOOR COVERING AND METHOD FOR PRODUCING A FLOOR COVERING
REVETEMENT DE SOL ET PROCEDE DE FABRICATION D'UN REVETEMENT DE SOL

(43) Veröffentlichungstag der Anmeldung: 07.12.2016
(62) Teilanmeldung aus: 14153311.7
(73) Patentinhaber: Välinge Innovation AB, 263 65 Viken (SE)
(72) Erfinder: Kalwa, Norbert, 32805 Horn-Bad Meinberg (DE)
(74) Vertreter: Välinge Innovation AB

(56) Entgegenhaltungen:
- WO-A1-00/40403
- US-A1- 2006 172 118
- US-A1- 2007 029 041
- DATABASE WPI Week 199317 Thomson Scientific, London, GB; AN 1993-140066 XP002726997, & JP H05 77362 A (MATSUSHITA ELECTRIC WORKS LTD) 30. März 1993 (1993-03-30) & DATABASE EPODOC EUROPEAN PATENT OFFICE, THE HAGUE, NL; "Building panel",
- DATABASE WPI Week 199328 Thomson Scientific, London, GB; AN 1993-223803 XP002726998, & JP H05 147006 A (DAIKEN KOGYO KK) 15. Juni 1993 (1993-06-15) & DATABASE EPODOC EUROPEAN PATENT OFFICE, THE HAGUE, NL; "Manufacture of decorative sheet",
- DATABASE WPI Week 199328 Thomson Scientific, London, GB; AN 1993-223804 XP002726999, & JP H05 147007 A (DAIKEN KOGYO KK) 15. Juni 1993 (1993-06-15) & DATABASE EPODOC EUROPEAN PATENT OFFICE, THE HAGUE, NL; "Manufacture of decorative sheet",
- DATABASE WPI Week 199346 Thomson Scientific, London, GB; AN 1993-364604 XP002727000, & JP H05 269705 A (DAIKEN KOGYO KK) 19. Oktober 1993 (1993-10-19) & DATABASE EPODOC EUROPEAN PATENT OFFICE, THE HAGUE, NL;
- DATABASE WPI Week 199346 Thomson Scientific, London, GB; AN 1993-364603 XP002727001, & JP H05 269704 A (DAIKEN KOGYO KK) 19. Oktober 1993 (1993-10-19) & DATABASE EPODOC EUROPEAN PATENT OFFICE, THE HAGUE, NL;

## Beschreibung

Die Erfindung betrifft einen Fußbodenbelag und ein Verfahren zum Herstellen eines Fußbodenbelags.

Holzwerkstoffe, die eine Furnieroberfläche aufweisen, sind bekannt. Sie bestehen üblicherweise aus einem Holzwerkstoffträger (z.B. hochdichte Faserplatte (HDF), OSB-Platte, Spanplatte), einem mit sparsamen Leimauftrag aufgeleimten Furnier und einer Oberflächenvergütung, typischerweise einer Lackierung auf der Basis von UV-härtenden Lacken oder elektronenstrahlhärtenden Lacken. Die verwendeten Furniere weisen meist eine Stärke von 0,8 mm bis 2,5 mm auf. Zur Verklebung der Furniere auf der Trägerplatte werden meist Harnstoff- oder Polyvinylacetatleime mit den entsprechenden Härtern eingesetzt. Auf der Rückseite des Produkts befindet sich in der Regel ein Gegenzug auf Basis von Papier, Vorimprägnat oder Furnier, der die Spannungsgeometrie im Produkt gewährleisten soll. Derartige Produkte sind bekannt, so z.B. aus der DE 103 00 247, bei der ein Oriented Strand Board (OSB) als Trägerplatte und ein Furnier mittels Kunstharz miteinander verbunden sind, wobei zwischen Furnier und OSB ein Papier, ein so genanntes Underlay angeordnet ist, um ein Durchscheinen der OSB zu vermeiden. Aus der DE 10 2006 052 293 ist eine Trägerplatte, ebenfalls eine OSB, bekannt, die mittels Kunstharz mit einem Furnier verbunden ist. Die Furnieroberfläche ist bedruckt. Durch das Bedrucken wird ein Dekor erzeugt, das dann mit einem Lack oder Kunstharzüberzug versiegelt wird.

Schließlich ist eine Lindura ® Holzwerkstoffplatte der Schulte GmbH, Rüthen-Meiste bekannt, bei der eine hochdichte Faserplatte (HDF-Platte) als Trägerplatte mit einem Furnier verbunden ist, wobei die Verbindung durch eine Schicht aus einer pulverförmigen Mischung aus Holz und Kunstharz hergestellt wird. Auf der dem Furnier abgewandten Seite ist ein Gegenzug aufgebracht. Der Fokus liegt hier auf dem sparsamen Einsatz des Kunstharzes durch den Einsatz von recyceltem Holzpulver.

Furnierte Oberflächen sind als Echtholz-Oberflächen sehr geschätzt. Sie weisen eine angenehme Haptik auf und erzeugen angenehme akustische Verhältnisse. Sämtlichen bekannten Holzwerkstoffen mit einer Furnieroberfläche ist jedoch gemein, dass sie wegen der geringen Rohdichte des Furniers von meist nur 300 kg/m³ bis 500 kg/m³ nur eine geringe Druckfestigkeit aufweisen, die nur für wenige Verwendungen akzeptabel ist. Insbesondere im Bereich der Fußbodenbeläge sind furnierte Oberflächen kaum einsetzbar, weil das Furnier durch herabfallende Gegenstände schnell durchschlagen wird, der UV- oder strahlungshärtende Lack aber nicht repariert werden kann.

Die WO 00/40403 A1 lehrt, einen Schmelzkleber auf eine Holzwerkstoffplatte aufzubringen, den Schmelzkleber zu trocknen und dann durch Auflegen und Verpressen eines Furniers das Furnier mit der Holzwerkstoffplatte zu verbinden.

Fußbodenbeläge werden beim Kauf intensiv besichtigt und die Kaufentscheidung wird bei der intensiven Besichtigung gefällt. Es besteht daher die Aufgabe, einen Fußbodenbelag zur Verfügung zu stellen, der beim Kauf einen positiven Eindruck auf den Kunden macht, z. B. wegen der angenehmen Optik oder Haptik.

Es stellt sich daher die Aufgabe, einen Fußbodenbelag und ein Verfahren zu seiner Herstellung bereitzustellen, der diese Aufgabe löst.

Diese Aufgabe wird gelöst durch einen Fußbodenbelag nach Anspruch 1 und ein Verfahren nach Anspruch 8.

Das Verfahren zum Herstellen eines Fußbodenbelags geht von einer Trägerplatte und einem Furnier aus, die miteinander durch ein Kunstharz verbunden sind. Erfindungsgemäß wird jedoch, abweichend zum Stand der Technik, zum Verbinden von Trägerplatte und Furnier ein flüssiges Kunstharz im Überschuss auf Trägerplatte und/oder Furnier aufgebracht. Überschuss bezeichnet hier die Menge an Kunstharz, die, bezogen auf die zum Verleimen erforderliche Menge, zusätzlich auf Trägerplatte und/oder Furnier aufgebracht wird. Dann wird das im Überschuss aufgebrachte Kunstharz getrocknet, aber nicht ausgehärtet. Trägerplatte und Furnier werden zu einem Pressgutstapel gefügt und der Pressgutstapel wird in einer Hochdruckpresse zu einem Holzwerkstoff verpresst.

Das erfindungsgemäße Verfahren sieht vor, dass der Pressgutstapel in einer Hochdruckpresse, üblicherweise eine Durchlauf- oder Kurztaktpresse (KT-Presse), verpresst wird. Das bei Presstemperaturen wieder verflüssigte Kunstharz wird dabei in das weniger dichte Furnier gepresst; die meist dichtere Oberfläche der Trägerplatte nimmt weniger Kunstharz auf. Gleichzeitig wird das Furnier durch den Druck, den die Hochdruckpresse ausübt, komprimiert. Beide Effekte wirken synergistisch zusammen und steigern die Druckfestigkeit der Furnieroberfläche. Die nach dem Komprimieren höhere Dichte des Furniers ist ebenso ein Beitrag zu einer höheren Druckfestigkeit wie das mindestens abschnittsweise Durchtränken des Furniers mit Kunstharz. Beide Maßnahmen widersprechen den üblichen Maßnahmen zur Herstellung eines Holzwerkstoffs mit einer Furnieroberfläche. Zum einen wird üblicherweise Kunstharz, das nur zum Fixieren des Furniers auf der Trägerplatte dient, mit meist bis zu 100g/m² (bezogen auf 100%) Feststoff sparsam eingesetzt und zum anderen vermeidet man das Pressen in einer Hochdruckpresse, um ein Komprimieren des Furniers zu vermeiden. Es hat sich jedoch herausgestellt, dass das Aussehen und die Haptik des erfindungsgemäßen Holzwerkstoffs unverändert ästhetisch ansprechend sind.

Wesentliches Merkmal der Erfindung ist es, dass das Kunstharz, bezogen auf die zum Verleimen erforderliche Menge, im Überschuss eingesetzt wird, weil vorgesehen ist, dass das erneut verflüssigte Kunstharz beim Pressvorgang das Furnier teilweise durchdringt bzw. zwischen die Fasern des Furniers vordringt und dort aushärtet. Das Eindringen des Kunstharzes in das Furnier ist zum Fixieren des Furniers auf der Trägerplatte nicht erforderlich, dafür genügt ein oberflächlicher Kontakt mit dem Kunstharz. Der Überschuss beträgt, bezogen auf die zum Verleimen des Furniers erforderliche Menge an Kunstharz, mindestens 30%. Vorteilhaft beträgt die Menge an Kunstharz, die bei dem erfindungsgemäßen Verfahren eingesetzt werden, mehr als 50%, bevorzugt mehr als 100%, besonders bevorzugt von mehr als 200% der zum Verleimen des Furniers erforderlichen Menge an Kunstharz.

Das Einbringen von Stoffen, die das Eindringen des Kunstharzes in das Furnier verzögern oder unterbinden, z.B. von Holzmehl, ist von Nachteil. Holzmehl wird eingesetzt, um das "Durchschlagen" von Kunstharz zu verhindern, also gerade das Eindringen von Kunstharz in das Furnier bis zur Furnieroberfläche. Ein aktuelles Beispiel hierfür ist die vorstehend beschriebene "Lindura" ® Platte. Die erfindungsgemäßen Mengenvorgaben können, ausgehend vom üblichen und bekannten Verleimen eines Furniers auf einer Trägerplatte und den dort eingesetzten Mengen an Kunstharz von üblicherweise bis 100 g/m² bezogen auf 100 % Feststoff, mit wenigen orientierenden Versuchen vom Fachmann ermittelt und optimiert werden.

Bereits mit Einsatz von 130 g Kunstharz/m² können die positiven Effekte des erfindungsgemäßen Verfahrens und des erfindungsgemäßen Holzwerkstoffs wahrgenommen werden. Nach einer vorteilhaften Ausführung der Erfindung werden mindestens 150 g Kunstharz/m² eingesetzt, um Furnier und Trägerplatte zu verbinden sowie die Druckfestigkeit des Furniers zu steigern. Weiter bevorzugt werden mindestens 200 g/m², insbesondere mindestens 300 g/m², vorteilhaft bis zu 400 g Kunstharz/m² eingesetzt. Sämtliche Angaben zum Kunstharz im Zusammenhang mit dieser Erfindung beziehen sich auf 100% Feststoff. Das Furnier soll in den meisten Anwendungen nur teilweise, ausgehend von der Trägerplatte mit Kunstharz getränkt sein. Die Furnieroberfläche ist in diesem Fall eine reine Holzoberfläche. Es ist aber auch ohne weiteres möglich, das Furnier vollständig mit Kunstharz zu tränken, so dass das Kunstharz die Furnieroberfläche abdeckt.

Dieser Überschuss an Kunstharz ist häufig nicht in einem Arbeitsgang bzw. in einer Schicht auf die Platte aufzubringen. Nach einer vorteilhaften Ausführung der Erfindung wird das flüssige Kunstharz in einer ersten und in einer zweiten Schicht aufgebracht, wobei optional das in der ersten Schicht aufgebrachte Kunstharz vor dem Aufbringen der zweiten Schicht getrocknet wird. Dieser Ablauf kann mehrfach wiederholt werden, z.B. wenn bis zu sechs oder mehr Schichten Kunstharz auf die Trägerplatte aufgebracht werden. Bei dem Trocknen des Kunstharzes ist darauf zu achten, dass zwar die Fließfähigkeit herabgesetzt oder gestoppt wird, dass jedoch die Reaktivität des Kunstharzes mindestens teilweise erhalten bleibt, so dass in der Presse eine Bindung zwischen Trägerplatte, Kunstharz und Furnier entsteht. Das Kunstharz wird also nach dem Auftragen in flüssiger Form getrocknet, aber nicht ausgehärtet. Das getrocknete Kunstharz kann klebrig sein. Grundsätzlich könnte das Kunstharz auch auf das Furnier aufgetragen werden, allerdings lässt es die geringe Festigkeit des Furniers in der Regel nicht zu, Kunstharz im Überschuss aufzubringen. Damit im Verpressungsprozess möglichst wenig Melaminharz in die Holzwerkstoffplatte (HWS-Platte) migriert, kann auch zunächst auf die Oberfläche der Platte eine Schicht eines wenig fließenden, duroplastischen Kunstharzes oder eines Gemisches aufgebracht werden. Es kann sich dabei um Harnstoff-Formaldehyd-Harz oder um ein Gemisch aus Harnstoff-Formaldehyd-Harz (UF-Harz) und Melamin-Formaldehyd-Harz (MF-Harz) mit einem hohen Anteil an UF-Harz handeln. Auch diese Harze würden natürlich vor dem Auftrag weiterer Harzschichten vorgetrocknet werden, bleiben jedoch reaktiv.

Das Kunstharz kann auf Wunsch eingefärbt sein, so dass beim Eindringen des Kunstharzes in das Furnier optisch wahrnehmbare Effekte erzielt werden, entweder um im Zusammenwirken mit anderen Maßnahmen wie dem Bedrucken des Furniers eine hochwertigere optische Wirkung zu erreichen oder um z.B. um bei einem besonders dünnen Furnier die Trägerplatte abzudecken. Häufig verwendete Farbtöne sind beige oder braune Farbtöne.

Zur Durchführung der Erfindung sind Kunstharze geeignet, die unter Druck und bei Einwirken erhöhter Temperatur, insbesondere unter den nachfolgend geschilderten Pressbedingungen zunächst verflüssigen und dann aushärten. Besonders typisch und geeignet ist Melaminharz. In das Melaminharz können bei Bedarf Korund oder andere bekannte Zuschlagstoffe eingebracht sein, die z.B. die Abrieb- oder Kratzfestigkeit der Oberfläche verbessern. Auch Fasern, insbesondere Cellulosefasern, bevorzugt verhornte Cellulosefasern können zur besseren Schichtbildung in das Melaminharz eingebracht sein. Die zum Aufleimen von Furnier auf Trägerplatten üblicherweise verwendeten Harnstoff- oder Polyvinylacetatleime eignen sich nicht gut für eine Verwendung in einer Hochdruckpresse, zum einen weil sie unter den dort herrschenden Druck- und Temperaturbedingungen nicht verflüssigen, in das Furnier eindringen und dort aushärten. Zum anderen ist z.B. Harnstoff nicht lichtecht und würde bei weitgehender Durchdringung des Furniers nach kurzer Zeit zu einem Vergilben führen.

Das Verpressen des Pressgutstapels erfolgt erfindungsgemäß in einer Hochdruckpresse. Eine übliche Furnierpresse zum Aufbringen von Furnieren auf Trägerplatten, die mit einem Pressdruck von 3 N/m² bis 5 N/m², einer Presstemperatur von bis zu 120 °C und einer Pressdauer von drei bis fünf Minuten arbeitet, ist nicht ausreichend, um in wirtschaftlicher Weise, insbesondere in vertretbarer Zeit, die großen Mengen an Kunstharz zu verpressen und auszuhärten. Der Druck der Furnierpressen genügt außerdem nicht, um das Furnier zu komprimieren. Erfindungsgemäß wird daher vorgeschlagen, Hochdruckpressen wie z.B. Durchlaufpressen oder Kurztaktpressen einzusetzen, bei denen ein Pressdruck zwischen 25 N/mm² und 50 N/mm² eingestellt werden kann. Die Presszeit beträgt in einer Hochdruckpresse zwischen 20 Sekunden und 60 Sekunden. Die Presstemperatur beträgt zwischen 160 °C und 200 °C. Unter diesen, im Vergleich zu einer konventionellen Furnierpresse, scharfen Bedingungen wird gewährleistet, dass das Kunstharz mindestens abschnittsweise in das Furnier eindringt, und dass das Furnier komprimiert wird. In einem erfindungsgemäßen Holzwerkstoff sind eine Trägerplatte und ein Furnier durch Kunstharz miteinander verbunden, wobei das Furnier komprimiert ist und das Kunstharz mindestens 30% der Furnierstärke durchdringt. Das Kunstharz durchdringt nach einer bevorzugten Ausführung mindestens 50% der Furnierstärke, vorteilhaft mindestens 70% der Furnierstärke, maximal jedoch 100% der Furnierstärke. Diese Angaben beziehen sich auf den Holzwerkstoff und damit auf das komprimierte Furnier. Das Furnier wird vorteilhaft um mindestens 30 % der ursprünglichen Stärke komprimiert, vorteilhaft um mindestens 50%, nach einer bevorzugten Ausführung maximal um bis zu 90% der ursprünglichen Stärke. Trotz des Komprimierens bleibt eine ästhetisch und haptisch ansprechende Furnieroberfläche erhalten. Versuche haben gezeigt, dass sich das Einbringen des, bezogen auf das einfache Verleimen, überschüssigen Kunstharzes unproblematisch gestaltet, weil das wieder verflüssigte Kunstharz beim Verpressen Luft aus dem Furnier verdrängt und in Zwischenräume zwischen den Holzfasern eindringt und dort ausgehärtet wird. Auf diese Weise bewirkt das eindringende Kunstharz eine Steigerung der Druckfestigkeit.

Die vorstehende Beschreibung zeigt die zahlreichen Vorteile des erfindungsgemäßen Verfahrens bzw. des erfindungsgemäßen Holzwerkstoffs. Das hier vorgeschlagene Verfahren ist mit bekannten Anlagen einfach und aufgrund der kurzen Pressdauer auch sehr wirtschaftlich durchzuführen. Versuche zum Profilieren des erfindungsgemäßen Holzwerkstoffs haben gezeigt, dass die Kantenbearbeitung auf einfache und präzise Weise durchgeführt werden kann; Ausrisse am Furnier, die nach einem Kantenschnitt für bekannte Furnierplatten leider üblich sind, kommen hier nicht vor. Der erfindungsgemäße Holzwerkstoff ist für Fußbodenbeläge geeignet. Zudem lässt sich der Holzwerkstoff ausgezeichnet nicht nur für Wand- und Deckenplatten, sondern auch Möbel oder Möbelteile mit beanspruchten Oberflächen einsetzen, ohne dass hier die Echtholzoberfläche aufgegeben werden muss. Hervorzuheben ist insbesondere die gute Beständigkeit gegen Feuchtigkeit, insbesondere, wenn das Kunstharz das Furnier zu mehr als 50% durchdringt.

Die Furnieroberfläche, d.h., die von der Trägerplatte wegweisende, sichtbare Oberfläche des Furniers des Holzwerkstoffs kann vor oder während, insbesondere aber auch nach dem Verpressen, einer Oberflächenbehandlung unterzogen werden. Insbesondere das Prägen der Holzoberfläche, um reliefartige bzw. dreidimensionale Strukturen zu erhalten, die z.B. eine holzartentypische Porenstruktur verleihen kann während oder nach dem Verpressen des Pressgutstapels durchgeführt werden. Aber auch das Bedrucken der Furnieroberfläche, z.B. um eine holzartentypische Färbung der Furnieroberfläche zu erreichen, kann erfolgen, vorzugsweise nach dem Verpressen des Pressgutstapels. Nach einer vorteilhaften Weiterbildung der Erfindung erfolgen das Prägen und das Bedrucken aufeinander bezogen, so dass ein synchrones Dekor entsteht, bei dem Farbgebung und -anordnung sowie Prägung aufeinander synchron abgestimmt sind. Das Prägen und Bedrucken kann insbesondere genutzt werden, um einem optisch wenig ansprechenden Furnier eine hochwertigere Anmutung zu geben.

Die Furnieroberfläche, die ggf. bedruckt und/oder geprägt ist, kann dann geölt oder lackiert werden. Ölen und Lackieren sind übliche Schutzmaßnahmen für Furnieroberflächen. Alternativ kann die ggf. bedruckte und/oder geprägte Furnieroberfläche auch mit einem Overlay, also einem kunstharzgetränkten Papier beschichtet werden, so wie es überwiegend für Laminatprodukte üblich ist. Die Pressbedingungen in einer Hochdruckpresse reichen aus, um ein Overlay auf der Furnieroberfläche zu fixieren.

Der Pressgutstapel kann nach einer weiteren Ausführung der Erfindung auch ein Underlay aufweisen, ein ggf. kunstharzgetränktes Papier oder Vlies, das beim Verpressen mit Trägerplatte und Furnier verbunden wird. Ein Papier oder insbesondere ein Vlies, das z.B. mit einem Flächengewicht von 30 g/m² bis 50 g/m² eingesetzt wird, verleiht dem Furnier auf dem Holzwerkstoff gemäß der Erfindung eine weiter gesteigerte Druckfestigkeit, da das Vlies auf das Furnier einwirkende Druckkräfte verteilt und ableitet. Wirkt im Kugelfalltest gemäß DIN EN 13329 eine Kugel auf die Furnieroberfläche eines Holzwerkstoffs ein, hinterlässt die Kugel eine kleinere Kalotte, also eine geringere Verformung, wenn unter dem Furnier ein Vlies oder ein Papier angeordnet ist. Ein Papier oder ein Vlies können sich auch dann als vorteilhaft erweisen, wenn das Furnier in kleineren Abmessungen verarbeitet wird als die Trägerplatte. Es vereinfacht das Fügen des Pressgutstapels wesentlich, wenn die Furnierstücke vorab auf einem Papier oder Vlies gefügt und fixiert sind, wobei das Papier oder Vlies die Abmessungen der Trägerplatte aufweist. Der Verbund aus Papier oder Vlies und Furnierstücken kann dann auf einfache Weise mit der mit flüssigem, dann getrocknetem Kunstharz beschichteten Trägerplatte angeordnet werden.

Auf einer dem Furnier abgewandten Unterseite der Trägerplatte ist erfindungsgemäß ein Gegenzug angeordnet, der für ausgeglichene Spannungsverhältnisse auf den beiden beschichteten Seiten der Trägerplatte sorgt. Der Gegenzug ist durch Aufbringen eines Furniers ausgeführt. Die Spannungen, die sich an der Oberfläche der Trägerplatte und ggf. im Furnier aufbauen, können durch Befeuchten ggf. reduziert werden. Da das flüssige Kunstharz auch nach dem Trocknen noch Wasser in den Pressgutstapel einbringt, bauen sich angesichts des Überschusses an Kunstharz und des darin enthaltenen Wassers geringere Spannungen auf.

Als Trägerplatte kommen Holzwerkstoffplatten wie z.B. mineralisch oder mit Kunstharz gebundene Holzwerkstoffplatten, Spanplatte, OSB-Platte, HDF-Platte oder mitteldichte Faserplatte (MDF-Platte) in Frage, aber auch Sperrholzplatten, Furnierplatten, Stab- oder Stäbchenplatten oder Massivholzplatten können verwendet werden. Aufgrund des Überschusses an Kunstharz ist das erfindungsgemäße Verfahren tolerant gegenüber Unebenheiten der Plattenoberfläche, so dass auch Platten mit einer gröberen Oberflächenstruktur verwendet werden können.

Das Furnier kann ein Schälfurnier oder ein Messerfurnier sein. Es kann ein bedrucktes oder ein geprägtes Furnier verwendet werden, es können aber auch auf Vlies oder Papier fixierte Furniere, insbesondere gefügte Furnierstücke verwendet werden.

Details der Erfindung werden anhand von Ausführungsbeispielen näher erläutert. Es zeigen:
- Fig. 1: eine schematische Darstellung eines Holzwerkstoffs
- Fig. 2: eine schematische Darstellung des vollständig von Kunstharz durchdrungenen Furniers
- Fig. 3: eine schematische Darstellung des teilweise von Kunstharz durchdrungenen Furniers.

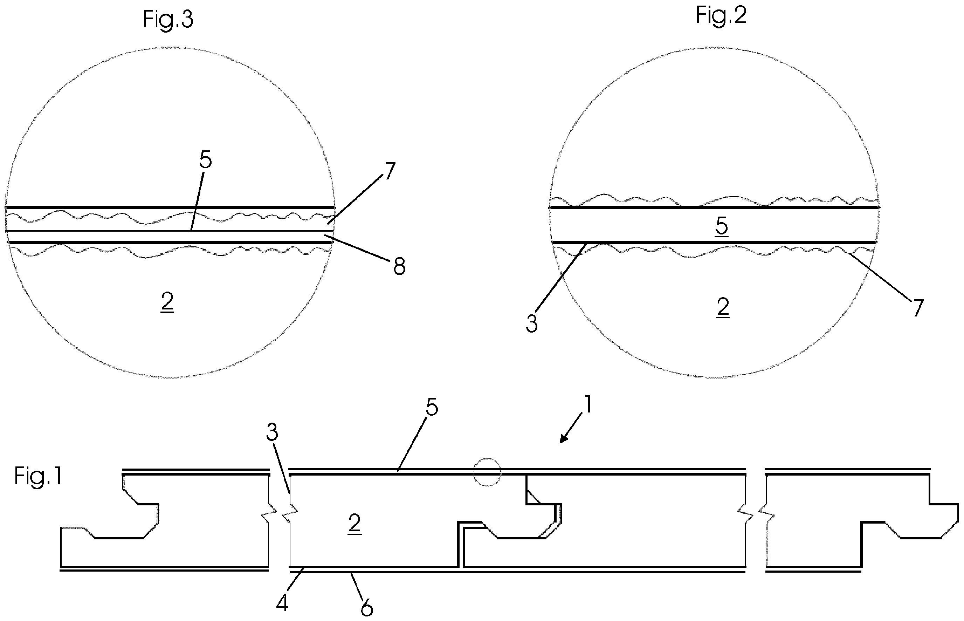

Fig. 1 zeigt eine schematische Darstellung des erfindungsgemäßen Holzwerkstoffs, hier einer Furnierplatte 1. Die Furnierplatte 1 weist eine Trägerplatte 2 auf, die auf der Oberseite 3 und der Unterseite 4 beschichtet ist. Auf der Oberseite 3 ist ein Furnier 5 angeordnet, auf der Unterseite 4 ist ein Gegenzug 6 angeordnet. Zwischen Trägerplatte 2 und Furnier 5 ist eine Kunstharzschicht 7 angeordnet, wobei das Kunstharz 7 teilweise oder vollständig in das Furnier 5 eingedrungen ist.

Als Trägerplatte können sämtliche vorstehend beschriebenen Platten aus Holz oder Holzwerkstoffmaterial eingesetzt werden. Die nachfolgend gewählten HDF-Platten können ohne weiteres durch andere Plattentypen ersetzt werden. Als Furnier können sämtliche vorgenannten Furniere eingesetzt werden, die nachfolgend beispielhaft eingesetzten Furniere können jederzeit durch andere Furniertypen ausgetauscht werden. Sowohl für die Trägerplatten als auch für das Furnier können Platten- oder Furnierstärke oder die Dichte des Furniers variieren.

Zur Herstellung des erfindungsgemäßen Holzwerkstoffs sind nachfolgend Pressbedingungen spezifisch angegeben. Es ist anzumerken, dass dies nur ausgewählte Pressbedingungen sind, die vorstehend angegebenen Druck-, Temperatur- und Zeitintervalle erlauben ein Variieren der Pressbedingungen, beispielsweise eine Verkürzung oder ein Verkürzen der Presszeit bei erhöhtem Druck oder erhöhter Temperatur oder einer Erhöhung beider Parameter. Gleiches gilt für eine Senkung von Druck und/oder Temperatur mit einer einhergehenden Verlängerung der Pressdauer.

Die verwendeten Kunstharze haben üblicherweise Feststoffgehalte von 60 - 70 %. Zur Reduzierung des Aufwandes des Trocknungsprozesses sowohl in energetischer als auch in maschinentechnischer Hinsicht, können die Kunstharze vor dem Auftrag mit Pulverharzen auf einen höheren Feststoffgehalt gebracht werden. Diese Gehalte können dann um 5-15% höher liegen.

### Ausführungsbeispiel 1 (nicht nach der Erfindung):

Ein Birken-Schälfurnier mit einer Stärke von 1,05 mm und einer Dichte von 350 kg/m³ soll als Furnier 5 auf eine hochdichte Faserplatte (HDF-Platte) von 12 mm Plattenstärke, Dichte: 850 kg/m³ als Trägerplatte 2 aufgebracht werden.

Erfindungsgemäß kann der Überschuss an Kunstharz 7 in einem weiten Bereich eingestellt werden, von 130 g/m² bis über 400 g/m². Vorliegend sollte der Versuch unternommen werden, so viel Kunstharz 7 aufzutragen, dass das Furnier 5 vollständig von Kunstharz durchdrungen wird. Auf die HDF-Platte wurden deshalb nach diesem Ausführungsbeispiel insgesamt 210g Kunstharz (100% Feststoff) in Form eines wässrigen Melaminharzes mit 60% Feststoffgehalt aufgebracht. Es wurden also 350 g/m² Melaminharz auf die Trägerplatte aufgebracht. Die 350 g/m² Melaminharz wurden in vier Schichten aufgetragen, mit jeder Schicht ein Viertel des Melaminharzes. Nach dem Auftragen von jeweils einem Viertel des Melaminharzes wurde das Kunstharz 7 in einem Umluftofen getrocknet bis das Melaminharz nicht mehr flüssig, aber noch klebrig war.

Vor dem Verpressen wurde auf der dem Furnier 5 abgewandten Unterseite 4 der Trägerplatte 2 ein Gegenzug 6 angeordnet, hier ein beharztes Papier mit einem Papiergewicht von 100 g/m² und einem Kunstharzauftrag von 120% der vorstehend beschriebenen 60%-igen Melaminharz verwendet.

In das noch klebrige Kunstharz wurde das vorstehend beschriebene Birken-Schälfurnier eingelegt und in einer Laborpresse, die in ihren Leistungsmerkmalen einer Kurztaktpresse entspricht, verpresst. Die Presstemperatur betrug 165 °C, die Pressdauer 1 Minute und der Pressdruck war auf 30 N/mm² eingestellt.

Das Birken-Schälfurnier ist ein helles Furnier 5, das kaum Strukturmerkmale wie z.B. Poren aufweist. Das auf das Furnier 5 einwirkende Pressblech war strukturiert, es zeigte die Porenstruktur von Eiche.

Nach dem Verpressen wurde die erfindungsgemäß hergestellte Furnierplatte 1 untersucht. Es zeigte sich, dass das Melamin das Furnier vollständig durchdrungen hat, so wie in Fig. 2 dargestellt. Auf der Oberseite des Furniers 5 hatte sich eine vollständige Melaminharzschicht ausgebildet, die die Struktur des Pressblechs besaß. Das Birken-Schälfurnier der Furnierplatte 1 wies eine Stärke von 0,5 mm auf, es wurde also um mehr als 50% komprimiert. Der hergestellte Holzwerkstoff wies nicht nur die Porenstruktur einer Eiche-Oberfläche auf. Durch das in das Furnier 5 eingedrungene Melamin wurde die Farbgebung des ursprünglich hellen Schälfurniers dunkler, so dass auch die Farbgebung näher an eine Eiche-Oberfläche heranrückte. Dieser Effekt kann durch Einfärben des Melaminharzes intensiviert und gesteuert werden.

Die Furnieroberfläche des Holzwerkstoffs wurde 6 Stunden mit Wasser beaufschlagt. Es wurde keine Quellung oder Verformung des Furniers 5 oder des Holzwerkstoffs insgesamt festgestellt.

### Ausführungsbeispiel 2 (nicht nach der Erfindung):

Für diese Ausführung der Erfindung wurde eine mit dem Ausführungsbeispiel 1 identische HDF-Platte als Trägerplatte 2 verwendet. Als Furnier 5 wird ein 0,9 mm Eichen-Messerfurnier verwendet. Es wurde das gleiche Melaminharz wie unter Ausführungsbeispiel 1 verwendet. Allerdings betrug der Einsatz lediglich 150 g/m² bei 100 % Feststoff, in dem 60%igen Melaminharz also 250 g/m².

Auf die Trägerplatte 2 wurde flüssiges Melaminharz im Mehrfachauftrag mit Zwischentrocknung aufgewalzt. Das Melaminharz wurde in drei Teilmengen eingeteilt und je eine Teilmenge wurde als einzelne Schicht aufgetragen, das jeweils flüssig aufgetragene Melaminharz wurde, wie in Ausführungsbeispiel 1 beschrieben, im Umlufttrockner getrocknet.

In das getrocknete, aber noch klebrige Kunstharz 7 wurde zunächst ein Glasvlies mit einem Flächengewicht von 50 g/m² als Underlay 8 und anschließend das Furnier 5, hier das Eichen-Messerfurnier, eingelegt. Als Gegenzug 6 wurde auf der Unterseite 4 der Trägerplatte 2 ein beharztes Papier mit einem Papiergewicht von 100 g/m² und einem Harzauftrag von 120% verwendet. Für den Harzauftrag wurde ebenfalls das 60%ige Melaminharz verwendet, das auch auf die Oberseite 3 der Trägerplatte 2 aufgebracht ist.
Der so hergestellte Pressgutstapel wurde in die bereits im Ausführungsbeispiel 1 beschriebene Laborpresse überführt und darin unter den gleichen Pressbedingungen mit glatten Pressblechen verpresst.

Der wie beschrieben hergestellte Holzwerkstoff, hier die Furnierplatte 1, wies eine attraktive Eichen-Oberfläche auf. Das Eichen-Messerfurnier wies nach dem Verpressen eine Stärke von 0,4 mm auf. Es war damit, ausgehend von der ursprünglichen Stärke von 0,9 mm um mehr als 65% komprimiert. Das Eichen-Messerfurnier war zu 50% von Kunstharz durchtränkt, so wie in Fig. 3 dargestellt. Es war kein Durchschlag des Melamins zu beobachten. Die Furnieroberfläche wurde anschließend mit einem Öl, das für Fußboden-anwendungen vorgesehen ist, behandelt. Der gemäß Ausführungsbeispiel 2 hergestellte Holzwerkstoff konnte, ohne Ausrisse im Furnier festzustellen, in Paneele aufgeteilt werden. Die Paneele konnten ohne Schäden am Eichen-Messerfurnier an den Kanten profiliert und als Fußbodenbelag eingesetzt werden.

## Patentansprüche

1. Fußbodenbelag aus Holzwerkstoff, bestehend aus einer Trägerplatte (2), einem ersten Furnier (5) auf der Oberseite (3), die miteinander durch ein Kunstharz (7) verbunden sind, sowie optional mit einem Overlay und/oder einem Underlay (8), und einem zweiten Furnier, wobei das zweite Furnier auf der Unterseite (4) der Trägerplatte (2) als Gegenzug (6) ausgeglichene Spannungsverhältnisse im Produkt gewährleisten soll, und wobei das erste Furnier (5) auf der Oberseite (3) um mindestens 30% der ursprünglichen Stärke komprimiert ist, und das Kunstharz (7) mindestens 30% der Furnierstärke des ersten Furniers (5) durchdringt.

2. Fußbodenbelag nach Anspruch 1, **dadurch gekennzeichnet, dass** ein Overlay auf dem ersten Furnier (5) auf der Oberseite (3) der Trägerplatte (2) angeordnet ist.

3. Fußbodenbelag nach Anspruch 1 oder 2, **dadurch gekennzeichnet, dass** ein Underlay (8) auf der Oberseite (3) der Trägerplatte (2) angeordnet ist.

4. Fußbodenbelag nach mindestens einem der Ansprüche 1 bis 3, **dadurch gekennzeichnet, dass** die Furnieroberfläche geölt oder lackiert ist, insbesondere mit einem strahlungshärtenden Lack.

5. Fußbodenbelag nach mindestens einem der Ansprüche 1 bis 4, **dadurch gekennzeichnet, dass** das erste Furnier (5) bedruckt und/oder geprägt ist.

6. Verfahren zum Herstellen eines Fußbodenbelags aus Holzwerkstoff, bestehend aus einer Trägerplatte (2) mit einem ersten Furnier (5) auf der Oberseite (3) und mit einem zweiten Furnier auf der Unterseite (4) der Trägerplatte (2), das als Gegenzug (6) ausgeglichene Spannungsverhältnisse im Produkt gewährleisten soll, wobei das erste Furnier (5) und die Trägerplatte miteinander durch ein Kunstharz (7) verbunden sind, sowie optional mit einem Overlay und/oder einem Underlay (8), wobei
- ein flüssiges Kunstharz (7) in einem, bezogen auf die zum Verleimen erforderliche Menge, Überschuss von mindestens 30% auf die Trägerplatte (2) und/oder das erste Furnier (5) aufgebracht wird,
- das aufgebrachte Kunstharz (7) getrocknet, aber nicht ausgehärtet wird,
- die Trägerplatte (2), das erste Furnier (5) und das zweite Furnier zu einem Pressgutstapel gefügt werden und
- der Pressgutstapel unter Wirkung von Druck und Temperatur zu dem Holzwerkstoff verpresst wird und
- das erste Furnier (5) auf der Oberseite (3) der Trägerplatte (2) um mindestens 30% der ursprünglichen Stärke komprimiert wird.

7. Verfahren nach Anspruch 6, **dadurch gekennzeichnet, dass** der Fußbodenbelag profiliert wird.

8. Verfahren nach Anspruch 6 oder 7, **dadurch gekennzeichnet, dass** ein Overlay auf dem ersten Furnier (5) auf der Oberseite (3) der Trägerplatte (2) aufgelegt wird.

9. Verfahren nach mindestens einem der Ansprüche 6 bis 8, **dadurch gekennzeichnet, dass** ein Underlay (8) auf die Oberseite (3) der Trägerplatte (2) aufgelegt wird.

10. Verfahren nach mindestens einem der Ansprüche 6 bis 9, **dadurch gekennzeichnet, dass** die Furnieroberfläche geprägt, bedruckt geölt und /oder lackiert wird.

## Claims

1. A floor covering made of wood material, consisting of a support plate (2), a first veneer (5) on the upper side (3), which are joined together by a synthetic resin (7), and optionally with an overlay and/or an underlay (8), and a second veneer, wherein the second veneer on the underside (4) of the support plate (2) is intended to ensure balanced stress conditions in the product as a counter-layer (6), and wherein the first veneer (5) is compressed on the upper side (3) by at least 30% of the original thickness, and the synthetic resin (7) penetrates at least 30% of the veneer thickness of the first veneer (5).

2. The floor covering according to claim 1, **characterized in that** an overlay is arranged on the first veneer (5) on the upper side (3) of the support plate (2).

3. The floor covering according to claim 1 or 2, **characterized in that** an underlay (8) is arranged on the upper side (3) of the support plate (2).

4. The floor covering according to at least one of the claims 1 to 3, **characterized in that** the veneer surface is oiled or varnished, in particular with a radiation-curing varnish.

5. The floor covering according to at least one of the claims 1 to 4, **characterized in that** the first veneer (5) is printed and/or embossed.

6. A method for manufacturing a floor covering made of wood material, consisting of a support plate (2) with a first veneer (5) on the upper side (3) and with a second veneer on the bottom side (4) of the support plate (2), which is intended to ensure balanced stress conditions in the product as a counter-layer (6), wherein the first veneer (5) and the support plate are joined together by a synthetic resin (7), and optionally with an overlay and/or an underlay (8), wherein
- a liquid synthetic resin (7) is applied to the support plate (2) and/or the first veneer (5) in an excess of at least 30%, relative to the amount required for gluing,
- the applied synthetic resin (7) is dried but not cured,
- the carrier plate (2), the first veneer (5) and the second veneer are joined to form a pressed stack, and
- the pressed stack is pressed under the effect of pressure and temperature to form the wood-based material and
- the first veneer (5) is compressed on the upper side (3) of the support plate (2) by at least 30% of its original thickness.

7. The method according to claim 6, **characterized in that** the floor covering is profiled.

8. The method according to claim 6 or 7, **characterized in that** an overlay is placed on the first veneer (5) on the upper side (3) of the support plate (2).

9. The method according to at least one of the claims 6 to 8, **characterized in that** an underlay (8) is placed on the upper side (3) of the support plate (2).

10. The method according to at least one of the claims 6 to 9, **characterized in that** the veneer surface is embossed, printed, oiled and/or varnished.

## Revendications

1. Panneau pour revêtement de sol en matériau dérivé du bois, constitué d'une plaque de support (2), d'une première feuille de placage (5) sur le côté supérieur (3), qui sont reliées l'une à l'autre par une résine synthétique (7) ainsi qu'optionnellement à une sur-couche et/ou une sous-couche (8), et d'une seconde feuille de placage, dans lequel la seconde feuille de placage sur le côté inférieur (4) de la plaque de support (2) doit garantir, en tant que contrepartie (6), des rapports de contraintes équilibrés dans le produit, et dans lequel la première feuille de placage (5) sur le côté supérieur (3) est comprimée d'au moins 30 % de l'épaisseur originelle et la résine synthétique (7) pénètre au moins 30 % de l'épaisseur de feuille de placage de la première feuille de placage (5).

2. Panneau pour revêtement de sol selon la revendication 1, **caractérisé en ce qu'**une sur-couche est agencée sur la première feuille de placage (5) sur le côté supérieur (3) de la plaque de support (2).

3. Panneau pour revêtement de sol selon la revendication 1 ou 2, **caractérisé en ce qu'**une sous-couche (8) est agencée sur le côté supérieur (3) de la plaque de support (2).

4. Panneau pour revêtement de sol selon au moins l'une des revendications 1 à 3, **caractérisé en ce que** la surface de feuille de placage est huilée ou vernie, en particulier avec un vernis durcissant au rayonnement.

5. Panneau pour revêtement de sol selon au moins l'une des revendications 1 à 4, **caractérisé en ce que** la première feuille de placage (5) est imprimée et/ou estampée.

6. Procédé de fabrication d'un panneau pour revêtement de sol en matériau dérivé du bois, constitué d'une plaque de support (2) avec une première feuille de placage (5) sur le côté supérieur (3) et avec une seconde feuille de placage sur le côté inférieur (4) de la plaque de support (2) qui doit garantir, en tant que contrepartie (6), des rapports de contraintes équilibrés dans le produit, dans lequel la première feuille de placage (5) et la plaque de support sont reliées l'une à l'autre par une résine synthétique (7) ainsi qu'optionnellement à une sur-couche et/ou une sous-couche (8), dans lequel
- une résine synthétique (7) liquide est appliquée avec un excédent, par rapport à la quantité nécessaire pour le collage, d'au moins 30 % sur la plaque de support (2) et/ou sur la première feuille de placage (5),
- la résine synthétique (7) appliquée est séchée mais pas durcie,
- la plaque de support (2), la première feuille de placage (5) et la seconde feuille de placage sont assemblées pour former une pile de produit à compacter et
- la pile de produit à compacter est compactée sous l'effet de la pression et de la température pour former le matériau dérivé du bois et
- la première feuille de placage (5) sur le côté supérieur (3) de la plaque de support (2) est comprimée d'au moins 30 % de l'épaisseur originelle.

7. Procédé selon la revendication 6, **caractérisé en ce que** le panneau pour revêtement de sol est profilé.

8. Procédé selon la revendication 6 ou 7, **caractérisé en ce qu'**une sur-couche est déposée sur la première feuille de placage (5) sur le côté supérieur (3) de la plaque de support (2).

9. Procédé selon au moins l'une des revendications 6 à 8, **caractérisé en ce qu'**une sous-couche (8) est déposée sur le côté supérieur (3) de la plaque de support (2).

10. Procédé selon au moins l'une des revendications 6 à 9, **caractérisé en ce que** la surface de feuille de placage est estampée, imprimée, huilée et/ou vernie.
